# EUROPEAN PATENT SPECIFICATION

(11) **EP 3 306 858 B1**
(45) Date of publication and mention of the grant of the patent: **23.10.2019**
(21) Application number: 16802355.4
(22) Date of filing: 11.03.2016
(51) Int. Cl.: H04L 12/24

(54) **NETWORK MANAGEMENT SYSTEM DEPLOYMENT METHOD AND DEVICE, AND NETWORK MANAGEMENT SYSTEM**
VERFAHREN UND VORRICHTUNG FÜR DEN EINSATZ EINES NETZWERKVERWALTUNGSSYSTEMS SOWIE NETZWERKVERWALTUNGSSYSTEM
PROCÉDÉ ET DISPOSITIF DE DÉPLOIEMENT D'UN SYSTÈME DE GESTION DE RÉSEAU, ET SYSTÈME DE GESTION DE RÉSEAU

(30) Priority: 05.06.2015 CN 201510307501
(43) Date of publication of application: 11.04.2018
(73) Proprietor: ZTE Corporation, Shenzhen, Guangdong 518057 (CN)
(72) Inventor: LI, Weidong, Shenzhen Guangdong 518057 (CN)
(74) Representative: Aipex B.V.
(86) International application number: PCT/CN2016/076155
(87) International publication number: WO 2016/192432

(56) References cited:
- CN-A- 101 938 164
- CN-A- 102 104 420
- US-A1- 2008 141 240
- US-A1- 2012 250 695
- US-A1- 2015 033 349

## Description

### Technical Field

The present document relates to, but is not limited to a network management technology, and more particularly relates to a Network Management System (NMS) deployment method and device, and an NMS.

### Background

With the development of network technology and the increase of network capacity, more demands are made on an NMS which performs alarm management, security management, configuration management and the like in a network, software and hardware configurations of the NMS directly affect the network management performance. That is, the installation and capacity expansion of the NMS become important links for constructing a network environment.

At present, during initial installation of an NMS, installation parameters of the NMS will be usually configured according to the type, amount, function and stored data volume of managed network equipment as well as software and hardware characteristics of a server to be deployed, so as to configure an NMS suitable for a network environment. With the construction of a network, the managed network equipment is usually required to be scaled up. In order to expand the management capability of the NMS, the purpose of capacity expansion can be achieved by enhancing, for example, server memory, hard disk capacity and the like and adjusting parameter settings of the NMS. To complete capacity expansion of an NMS of which deployed hardware and software cannot meet requirements, it is needed to change a server, to migrate data and to adjust parameters of the NMS to be deployed. The capacity of a distributed NMS can be expanded in a manner of adding a new server node. Meanwhile, it is needed to perform a migration process and a data migration operation, and to configure capacity expansion parameters of the newly-added server node.

However, in an NMS deployment process in the related art, an operator needs to set related parameters for an NMS to be deployed in either an initial NMS installation process or any one of the above capacity expansion modes, so as to result in the problems of low efficiency and complex implementation of NMS deployment.

The features of the preamble of the independent claims are known from US 2015/0033349. Related technologies are also known from US 2008/0141240.

### Summary

The following is a brief introduction for a subject described herein in detail. The brief introduction is not intended to restrict the protection scope of claims.

Embodiments of the present invention provide an NMS deployment method and device, and an NMS as defined in the independent claims, to solve the problems in the related art of low efficiency and complex implementation of NMS deployment caused by an operator needing to set related parameters for an NMS to be deployed in an NMS deployment process.

According to a first aspect, an NMS deployment method is provided. An NMS executing the NMS deployment method includes a main control server. The method includes the steps as follows.

The main control server collects system information of the NMS, the system information includes hardware information and software information of the NMS.

An installation template satisfying the system information is selected according to a comparison between the system information and reference information of multiple installation templates pre-configured on the main control server, herein the reference information is set to indicate the hardware information and the software information of the NMS suitable for an installation template to which the reference information pertains.

An installation operation is executed on the NMS via a first execution script in the selected installation template.

In a first possible implementation manner of the first aspect, the multiple installation templates are divided in advance according to management scales of different NMSs, each of the multiple installation templates is used to indicate, via the reference information, to use a management scale, a number of client accesses and occupied resources of an NMS deployed via the installation template, and the reference information and the system information include a framework, a number of digits, memory and a database environment requirement of a server.

The step that an installation template satisfying the system information is selected according to a comparison between the system information and reference information of multiple installation templates includes the sub-steps as follows.

Contents in the collected system information are compared with reference information in each of the multiple installation templates, and multiple candidate installation templates in which the reference information meets requirements of the system information are selected.

An installation template meeting installation requirements of the NMS is selected by comparing the management scale, the number of client accesses and the occupied resources indicated by each of the multiple candidate installation templates with an actual management scale, number of client accesses and occupied resources of the NMS.

In a second possible implementation manner of the first aspect, before the main control server collects system information of the NMS, the method further includes the steps as follows.

A system installation resident program is installed on the main control server, the system installation resident program is used to send an installation request message to the main control server.

A system installation main program in the main control server is initiated, and the main control server receives the installation request message from the system installation resident program via the system installation main program, and sets up a communication link between the system installation main program and the system installation resident program.

According to the second possible implementation manner of the first aspect, in a third possible implementation manner, the NMS further includes a first slave server, and before a system installation main program in the main control server is initiated, the method further includes the steps as follows.

A system installation resident program is installed on the first slave server, the system installation resident program installed on the first slave server is configured with a name or Internet Protocol (IP) address of the main control server.

The main control server collects the system information of the NMS via the communication between the system installation main program and the system installation resident program, and specifically,
the main control server collects the system information of the NMS via the respective communication between the system installation main program and each system installation resident program.

According to the first aspect and any one of the first to third possible implementation manners of the first aspect, in a fourth possible implementation manner, the first execution script includes a process deployment script and a parameter adjustment script.

According to the first aspect or the first possible implementation manner of the first aspect, in a fifth possible implementation manner, the method further includes the steps as follows.

The main control server collects system information of a target server, herein the target server includes all servers in a hardware-changed NMS, or includes one or more of the main control server and a second slave server, the second slave server is a slave server added during capacity expansion, and the system information includes hardware information and software information of the target server.

A capacity expansion template satisfying the system information is selected according to a comparison between the system information and reference information of multiple capacity expansion templates pre-configured on the main control server, herein the reference information is set to indicate the hardware information and the software information of the target server suitable for a capacity expansion template to which the reference information pertains.

A capacity expansion operation is executed on the NMS via the first execution script and a second execution script in the selected capacity expansion template.

According to the fifth possible implementation manner of the first aspect, in a sixth possible implementation manner, before the main control server collects system information of the target server, the method further includes the steps as follows.

A system capacity expansion resident program is installed on the target server, the system capacity expansion resident program is used to send a capacity expansion request message to the main control server.

A system capacity expansion main program in the main control server is initiated, and the main control server receives the installation request message via the initiated system capacity expansion main program, and sets up a communication link between the system capacity expansion main program and the system capacity expansion resident program.

According to the sixth possible implementation manner of the first aspect, in a seventh possible implementation manner, the NMS further includes a first slave server, and the target server includes all servers in the hardware-changed NMS, or includes one or more of the main control server, the first slave server and the second slave server. And/or,
the multiple capacity expansion templates are divided in advance according to management scales of different NMSs, each of the multiple capacity expansion templates is used to indicate, via the reference information, to use a management scale, a number of client accesses and occupied resources of an NMS deployed via the capacity expansion template, and the second execution script includes a data backup script and a data migration script.

According to a second aspect, an NMS deployment method is also provided. An NMS executing the NMS deployment method includes a main control server. The method includes the steps as follows.

The main control server collects system information of a target server, herein the target server includes all servers in a hardware-changed NMS, or includes one or more of the main control server and a first slave server, the first slave server is a slave server added during capacity expansion, and the system information includes hardware information and software information of the target server.

A capacity expansion template satisfying the system information is selected according to a comparison between the system information and reference information of multiple capacity expansion templates pre-configured on the main control server, herein the reference information is set to indicate the hardware information and the software information of the NMS suitable for a capacity expansion template to which the reference information pertains.

A capacity expansion operation is executed on the NMS via an execution script in the selected capacity expansion template.

In a first possible implementation manner of the second aspect, the multiple capacity expansion templates are divided in advance according to management scales of different NMSs, each of the multiple capacity expansion templates is used to indicate, via the reference information, to use a management scale, a number of client accesses and occupied resources of an NMS deployed via the capacity expansion template, and the reference information and the system information include a framework, a number of digits, memory and a database environment requirement of a server.

The step that a capacity expansion template satisfying the system information is selected according to a comparison between the system information and reference information of multiple capacity expansion templates includes the sub-steps as follows.

Contents in the collected system information are compared with reference information in each of the multiple capacity expansion templates, and multiple candidate capacity expansion templates in which the reference information meets requirements of the system information are selected.

A capacity expansion template meeting capacity expansion requirements of the NMS is selected by comparing the management scale, the number of client accesses and the occupied resources indicated by each of the multiple candidate capacity expansion templates with an actual management scale, number of client accesses and occupied resources of the NMS.

In a second possible implementation manner of the second aspect, before the main control server collects system information of the target server, the method further includes the steps as follows.

A system capacity expansion resident program is installed on the target server, the system capacity expansion resident program is used to send a capacity expansion request message to the main control server.

A system capacity expansion main program in the main control server is initiated, and the main control server receives the capacity expansion request message via the initiated system capacity expansion main program, and sets up a communication link between the system capacity expansion main program and the system capacity expansion resident program.

According to the second aspect and the first or second possible implementation manner of the second aspect, in a third possible implementation manner, the NMS further includes a second slave server, and the target server includes all servers in the hardware-changed NMS, or includes one or more of the main control server, the first slave server and the second slave server. And/or,
the execution script includes a process deployment script, a parameter adjustment script, a data backup script and a data migration script.

According to a third aspect, an NMS deployment device is also provided. The NMS deployment device is arranged in a main control server of an NMS. The device includes:
a collection module, configured to collect system information of the NMS, herein the system information includes hardware information and software information of the NMS;
a selection module, configured to select an installation template satisfying the system information according to a comparison between the system information collected by the collection module and reference information of multiple installation templates pre-configured on the main control server, herein the reference information is set to indicate the hardware information and the software information of the NMS suitable for the installation template to which the reference information pertains; and
an execution module, configured to execute an installation operation on the NMS via a first execution script in the installation template selected by the selection module.

In a first possible implementation manner of the third aspect, the multiple installation templates are divided in advance according to management scales of different NMSs, each of the multiple installation templates is configured to indicate, via the reference information, to use a management scale, a number of client accesses and occupied resources of an NMS deployed via the installation template, and the reference information and the system information include a framework, a number of digits, memory and a database environment requirement of a server.

The selection module includes: a first selection unit, configured to compare contents in the collected system information with reference information in each of the multiple installation templates, and select multiple candidate installation templates in which the reference information meets requirements of the system information; and a second selection unit, configured to select an installation template meeting installation requirements of the NMS by comparing the management scale, the number of client accesses and the occupied resources indicated by each of the multiple candidate installation templates selected by the first selection unit with an actual management scale, number of client accesses and occupied resources of the NMS.

In a second possible implementation manner of the third aspect, the device further includes: an installation module, configured to install, before the collection module collects system information of the NMS, a system installation resident program on the main control server, herein the system installation resident program is used to send an installation request message to the main control server; and
an initiation module, configured to initiate a system installation main program in the main control server, to make the main control server receive the installation request message via the initiated system installation main program, and set up a communication link between the system installation main program and the system installation resident program.

According to the second possible implementation manner of the third aspect, in a third possible implementation manner, the NMS further includes a first slave server; the installation module is further configured to install, before the initiation module initiates a system installation main program in the main control server, the system installation resident program on the first slave server, herein the system installation resident program installed on the first slave server is configured with a name or IP address of the main control server; and
the collection module is configured to collect the system information of the NMS via the respective communication between the system installation main program and each system installation resident program.

According to the third aspect and any one of the first to third possible implementation manners of the third aspect, in a fourth possible implementation manner, the first execution script includes a process deployment script and a parameter adjustment script.

According to the third aspect or the first possible implementation manner of the third aspect, in a fifth possible implementation manner, the collection module is further configured to collect system information of a target server, herein the target server includes all servers in a hardware-changed NMS, or includes one or more of the main control server and a second slave server, the second slave server is a slave server added during capacity expansion, and the system information includes hardware information and software information of the target server.

The selection module is further configured to select a capacity expansion template satisfying the system information according to a comparison between the system information collected by the collection module and reference information of multiple capacity expansion templates pre-configured on the main control server, wherein the reference information is set to indicate the hardware information and the software information of the target server suitable for a capacity expansion template to which the reference information pertains.

The execution module is further configured to execute a capacity expansion operation on the NMS via the first execution script and a second execution script in the capacity expansion template selected by the selection module.

According to the fifth possible implementation manner of the third aspect, in a sixth possible implementation manner, the installation module is further configured to install, before the collection module collects system information of the target server, a system capacity expansion resident program on the target server, herein the system capacity expansion resident program is used to send a capacity expansion request message to the main control server.

The initiation module is further configured to initiate a system capacity expansion main program in the main control server, to make the main control server receive the installation request message via the initiated system capacity expansion main program, and set up a communication link between the system capacity expansion main program and the system capacity expansion resident program.

According to the sixth possible implementation manner of the third aspect, in a seventh possible implementation manner, the NMS further includes a first slave server, and the target server includes all servers in the hardware-changed NMS, or includes one or more of the main control server, the first slave server and the second slave server. And/or,
the multiple capacity expansion templates are divided in advance according to management scales of different NMSs, each of the multiple capacity expansion templates is configured to indicate, via the reference information, to use a management scale, a number of client accesses and occupied resources of an NMS deployed via the capacity expansion template, and the second execution script includes a data backup script and a data migration script.

According to a fourth aspect, an NMS deployment device is also provided. The NMS deployment device is arranged in a main control server of an NMS. The device includes:
a collection module, configured to collect system information of a target server, herein the target server includes all servers in a hardware-changed NMS, or includes one or more of the main control server and a first slave server, the first slave server is a slave server added during capacity expansion, and the system information includes hardware information and software information of the target server;
a selection module, configured to select a capacity expansion template satisfying the system information according to a comparison between the system information collected by the collection module and reference information of multiple capacity expansion templates pre-configured on the main control server, herein the reference information is set to indicate the hardware information and the software information of the NMS suitable for a capacity expansion template to which the reference information pertains; and
an execution module, configured to execute a capacity expansion operation on the NMS via an execution script in the capacity expansion template selected by the selection module.

In a first possible implementation manner of the fourth aspect, the multiple capacity expansion templates are divided in advance according to management scales of different NMSs, each of the multiple capacity expansion templates is configured to indicate, via the reference information, to use a management scale, a number of client accesses and occupied resources of an NMS deployed via the capacity expansion template, and the reference information and the system information include a framework, a number of digits, memory and a database environment requirement of a server.

The selection module includes: a first selection unit, configured to compare contents in the collected system information with reference information in each of the multiple capacity expansion templates, and select multiple candidate capacity expansion templates in which the reference information meets requirements of the system information; and a second selection unit, configured to select a capacity expansion template meeting capacity expansion requirements of the NMS by comparing the management scale, the number of client accesses and the occupied resources indicated by each of the multiple candidate capacity expansion templates selected by the first selection unit with an actual management scale, number of client accesses and occupied resources of the NMS.

In a second possible implementation manner of the fourth aspect, the device further includes: an installation module, configured to install, before the collection module collects system information of the target server, a system capacity expansion resident program on the target server, herein the system capacity expansion resident program is set to send a capacity expansion request message to the main control server; and
an initiation module, configured to initiate a system capacity expansion main program in the main control server, to make the main control server receive the capacity expansion request message via the initiated system capacity expansion main program, and set up a communication link between the system capacity expansion main program and the system capacity expansion resident program.

According to the fourth aspect and the first or second possible implementation manner of the fourth aspect, in a third possible implementation manner, the NMS further includes a second slave server, and the target server includes all servers in the hardware-changed NMS, or includes one or more of the main control server, the first slave server and the second slave server. And/or,
the execution script includes a process deployment script, a parameter adjustment script, a data backup script and a data migration script.

According to a fifth aspect, an NMS is also provided. The NMS includes a main control server, or includes a main control server and a first slave server, herein the main control server is provided with the NMS deployment device as mentioned above in any one of the third aspect and the fourth aspect.

An NMS deployment method and device, and an NMS are provided. A system installation resident program is installed in a main control server of an NMS. When a system installation main program of the main control server is initiated, a communication link between the system installation main program and the system installation resident program is set up to collect system information of the NMS, so as to select an installation template satisfying the system information by comparing the collected system information with reference information of multiple installation templates pre-configured on the main control server, thereby achieving an operation of automatically installing the NMS via the selected installation template. The NMS deployment method provided in the present embodiment solves the problems in the related art of low efficiency and complex implementation of NMS deployment caused by an operator needing to set related parameters for an NMS to be deployed in an NMS deployment process.

After the drawings and the detailed descriptions are read and understood, other aspects may be understood.

### Brief Description of Drawings

FIG. 1 is a flowchart of an NMS deployment method according to an embodiment of the present invention.
FIG. 2 is a flowchart of another NMS deployment method according to an embodiment of the present invention.
FIG. 3 is a flowchart of a further NMS deployment method according to an embodiment of the present invention.
FIG. 4 is a flowchart of a yet further NMS deployment method according to an embodiment of the present invention.
FIG. 5 is a structure diagram of an NMS deployment device according to an embodiment of the present invention.
FIG. 6 is a structure diagram of another NMS deployment device according to an embodiment of the present invention.
FIG. 7 is a structure diagram of an NMS according to an embodiment of the present invention.

### Detailed Description

The embodiments of the present invention will be elaborated below with reference to the drawings in detail. It is important to note that the embodiments in the present application and the features in the embodiments may be arbitrarily combined with each other without conflicts.

The steps shown in the flowchart of the drawings may be executed in a computer system including, for example, a set of computer-executable instructions. Moreover, although a logic sequence is shown in the flowchart, the shown or described steps may be executed in a sequence different from the sequence described here under certain conditions.

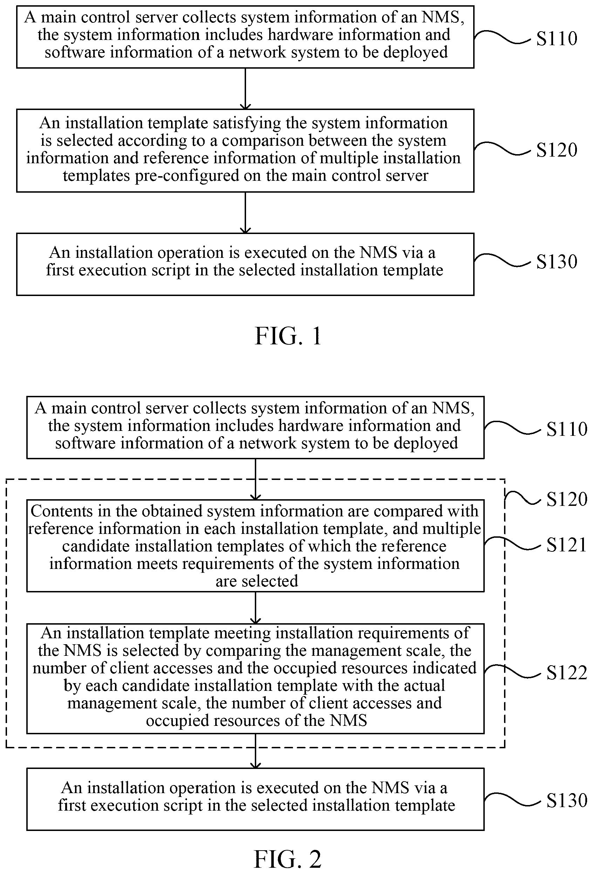

FIG. 1 is a flowchart of an NMS deployment method according to an embodiment of the present invention. The NMS deployment method provided in the present embodiment is suitable for an NMS installation situation. The method may be executed by an NMS. The NMS is usually implemented by hardware and software. The NMS in the present embodiment includes a main control server. The main control server is pre-configured with multiple installation templates, and each installation template includes reference information and a first execution script. As shown in FIG. 1, the method in the present embodiment may include the steps as follows.

In S110, a main control server collects system information of an NMS, the system information includes hardware information and software information of a network system to be deployed.

In the present embodiment, the main control server is basic equipment of an NMS. In a standalone NMS, network management and maintenance are performed only via the main control server. That is, installation and capacity expansion objects of the NMS are the main control server. In the present embodiment, during implementation, before the main control server collects system information of the NMS, a system installation resident program needs to be installed on the main control server, the system installation resident program is set to send an installation request message to the main control server. Thus, a system installation main program in the main control server is initiated, and the main control server may receive the installation request message via the initiated system installation main program, and set up a communication link between the system installation main program and the system installation resident program.

In the present embodiment, before the system information of the NMS is collected, a system installation resident program installed on a center control server exists as system-level service. That is to say, after the system installation resident program is installed, the program is always in a background running state after an Operating System (OS) is initiated, and repeatedly sends an installation request message to the main control server. For example, an installation request message is sent to the main control server repeatedly at a pre-set time interval for subsequent NMS installation. The system installation main program is a main control program executing NMS installation, and a user runs the system installation main program on the main control server to implement an installation operation. Herein, after the system installation main program is run, the main control server where the system installation main program is located receives the installation request message sent by the system installation resident program, and returns a response message, such that a communication link between the system installation resident programs is set up, and data can be transmitted via the communication link. Thus, a communication link between the system installation resident program and the system installation main program is set up via the initiated system installation main program, so that the main control server can collect data via a data channel of the communication link, to collect hardware information and software information in an NMS to be deployed.

In S120, an installation template satisfying the system information is selected according to a comparison between the system information and reference information of multiple installation templates pre-configured on the main control server.

It is important to note that contents of the system information collected in the present embodiment correspond to contents of reference information in an installation template. The reference information is an access condition of the installation template to which the reference information pertains. That is, the reference information indicates hardware and software conditions of the main control server needed for the installation template during deployment of the NMS, and the system information is actually-collected hardware and software information of the main control server.

In the present embodiment, an installation template satisfying the system information is selected by comparing the actually-collected data and the access conditions of multiple installation templates. For example, an installation template of which the access condition meets the lowest requirement of the system information can be selected, and an installation template of which the access condition is obviously superior to the system information can also be selected.

In S130, an installation operation is executed on the NMS via a first execution script in the selected installation template.

On the basis of the obtained installation template, installation operations such as file unzipping, data synchronization, environment parameter and database adjustment and process deployment are completed similarly by the running of the system installation main program and the communication between the system installation main program and the system installation resident program as well as installation actions defined in the installation template. The operations may be executed via a first execution script in the installation template. The first execution script includes, for example, a process deployment script, and a parameter adjustment script used for memory, hardware space, database and the like. Operation steps are pre-set in the first execution script, and the first execution script is executed in a process of running the system installation main program to complete automated installation.

The present embodiment provides an NMS deployment method. A system installation resident program is installed in a main control server of an NMS. When a system installation main program of the main control server is initiated, a communication link between the system installation main program and the system installation resident program is set up to collect system information of the NMS, so as to select an installation template satisfying the system information by comparing the collected system information with reference information of multiple installation templates pre-configured on the main control server, thereby achieving an operation of automatically installing the NMS via the selected installation template. The NMS deployment method provided in the present embodiment solves the problems in the related art of low efficiency and complex implementation of NMS deployment caused by an operator needing to set related parameters for an NMS to be deployed in an NMS deployment process.

In an exemplary embodiment, according to a manner of setting parameters by an operator, the good or bad of parameter setting is greatly affected by human factors, and depends on factors such as depth of system understanding of the operator and care degree. The operator usually needs to have a high skill, and therefore the labor cost of NMS deployment is increased. Compared with this manner, with an NMS deployment manner provided in the present embodiment, an installation template meeting demands of an NMS to be installed is selected by comparing actually-collected hardware information and software information with reference information in multiple templates, to automatically install an NMS.

FIG. 2 is a flowchart of another NMS deployment method provided by an embodiment of the present invention. Multiple installation templates in the present embodiment are divided in advance according to management scales of different NMSs. For example, the installation templates may be already planned by a manufacturer of a main control server before delivery, or may be made by an operator according to present network management scales and repeated historical installation experiences for several typical NMSs. Each installation template is configured to indicate, via reference information, to use the management scale, the number of client accesses and occupied resources of an NMS deployed via the installation template, and the reference information in the installation template and the collected system information may include, but is not limited to, a framework, the number of digits, memory and a database environment requirement of a server. Table 1 shows template access conditions and user sensible efficiency features of each installation template.

**Table 1**

| Template | Template access condition | | | User sensible efficiency feature | | |
|---|---|---|---|---|---|---|
| | Memory | Number of Digits | Number of CPUs | Number of client accesses | Alarm capacity | Number of devices |
| 1 | 4G | 32/64 | 2 | 20 | 1000 | 1000 |
| 2 | 6-7G | 64 | 4 | 50 | 3000 | 5000 |
| 3 | 8-15G | 64 | 4 | 100 | 5000 | 10000 |
| 4 | 16-31G | 64 | 8 | 200 | 10000 | 20000 |
| 5 | 32-63G | 64 | 16 | 300 | 20000 | 30000 |
| 6 | Over 64G | 64 | 24 | 400 | 30000 | 40000 |
| 7 | Over 128G | 64 | 32 | 500 | 40000 | 50000 |

As shown in Table 1, the template access conditions are contents of reference information, i.e., hardware and software requirements of the installation template for an NMS to be deployed, and serve as judgment standards for judging whether the corresponding installation template can be used. The user sensible efficiency features are characteristics displayed by the installation template via the reference information thereof and depend on the contents of the template access conditions. The template access conditions may also indicate to use resources occupied by an NMS deployed by using the corresponding installation template. The template access conditions and the user sensible efficiency features in each embodiment of the present invention are not limited to each item as shown in Table 1. Table 1 only shows some of the contents. On the basis of the embodiment shown in FIG. 1, S120 in the method provided in the present embodiment may include the sub-steps as follows.

In S121, contents in the obtained system information are compared with reference information in each installation template, and multiple candidate installation templates of which the reference information meets requirements of the system information are selected.

In S122, an installation template meeting installation requirements of the NMS is selected by comparing the management scale, the number of client accesses and the occupied resources indicated by each candidate installation template with the actual management scale, the number of client accesses and occupied resources of the NMS.

It has been already described that the template access conditions may reflect lowest requirements needed during installation of an NMS via the template. By comparing each item in the collected system information with each item of the reference information, reference information of multiple installation templates meets hardware and software requirements of a current NMS, namely the collected system information is fixed. For example, an installation template of which each index in system information is greater than reference information may be selected, namely candidate installation templates satisfying the template access conditions are selected from multiple pre-configured templates. Thus, further selection is performed via the user sensible efficiency features and occupied resources indicated by these candidate templates, and these pieces of information may serve as an important basis for a user to actually select an installation template.

For example, during implementation of the present embodiment, the main control server may display the reference information of the candidate installation templates and the user sensible efficiency features indicated by the reference information and the occupied resources for an operator on a Graphical User Interface (GUI). For example, the contents as shown in Table 1 are displayed, so that the operator makes a selection according to actual usage requirements. It is important to note that the method provided in the present embodiment may visually show those installation templates meeting demands of an NMS to be installed and those installation templates that can meet lowest demands of the NMS to be installed as well as those installation templates that can achieve more efficient system performance. And the operator selects an installation template meeting installation requirements for the NMS to be installed, such that the NMS deployment method is more flexible and controllable, and suitable for an actual network environment.

Alternatively, the NMS installation manner is illustrated with a standalone NMS as an example in both the embodiments as shown in FIG. 1 and FIG. 2. The NMS deployment manner provided in the embodiment of the present invention may also be applied to deployment of a multi-computer NMS such as a distributed NMS. Herein, the NMS in the present embodiment further includes a first slave server, and on the basis of each of the embodiments, before S120, the method further includes: installing a system installation resident program on the first slave server, the system installation resident program installed on the first slave server is configured with a name or IP address of the main control server. Correspondingly, S130 may be replaced with an operation that the main control server collects the system information of the NMS via a communication between the system installation main program and each system installation resident program.

In the present embodiment, the first slave server may form, for example, a structure of the distributed NMS with the main control server. The first slave server may receive an instruction of the main control server, so that the first slave server can be managed by a management operation on the main control server without directly opening a management interface management service on the first slave server. Therefore, a system installation resident program may be installed on the first slave server to serve as a system service, and the name or IP address of the main control server may be set for the system installation resident program installed on the first slave server, such that the first slave server may communicate with the main control server after the system installation resident program is installed, so as to collect the system information of the NMS via the communication between the system installation main program and each system installation resident program.

It is important to note that the first slave server in the present embodiment pertains to a part of the NMS. That is, the reference information of the installation template and the collected system information further include hardware and software information of the first slave server and a database environment standard. Moreover, in the present embodiment, the number of first slave servers is not limited. For example, there may be one or more first slave servers.

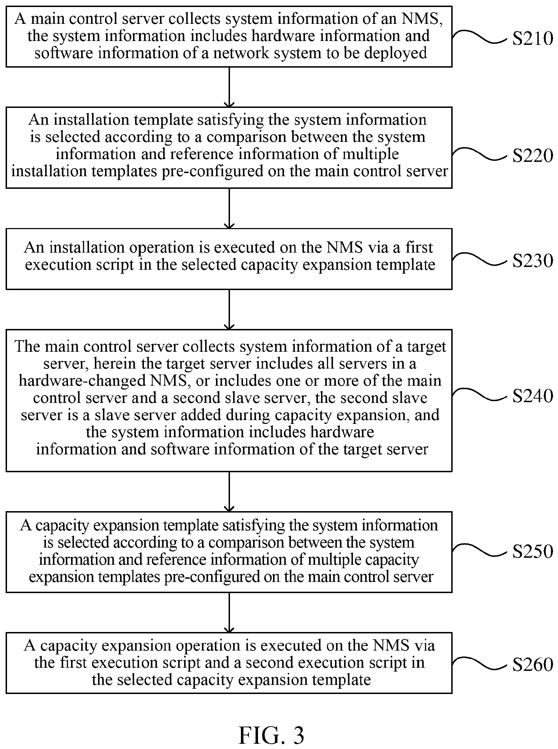

FIG. 3 is a flowchart of a further NMS deployment method according to an embodiment of the present invention. A main control server in the present embodiment is pre-configured with multiple capacity expansion templates, the multiple capacity expansion templates are divided in advance according to management scales of different NMSs similarly. Each capacity expansion template includes reference information, a first execution script and a second execution script. Each capacity expansion template is configured to indicate, via the reference information, to use the management scale, the number of client accesses and occupied resources of an NMS deployed via the capacity expansion template, the reference information in the capacity expansion template is identical to the contents of the above-mentioned installation template, and requirements for hardware and software of the whole NMS also need to be defined. The embodiment as shown in FIG. 3 is illustrated with expansion on the basis of the method as shown in FIG. 1. The method in the present embodiment may include the steps as follows.

In S210, the main control server collects system information of the NMS via a communication between a system installation main program and a system installation resident program, the system information includes hardware information and software information of a network system to be deployed.

In S220, an installation template satisfying the system information is selected according to a comparison between the system information and reference information of multiple installation templates pre-configured on the main control server.

In S230, an installation operation is executed on the NMS via a first execution script in the selected capacity expansion template.

Herein, S210 to S230 may refer to S110 to S130 in the embodiment as shown in FIG. 1.

In S240, the main control server collects system information of a target server, herein the target server includes all servers in a hardware-changed NMS, or includes one or more of the main control server and a second slave server, the second slave server is a slave server added during capacity expansion, and the system information includes hardware information and software information of the target server.

In the present embodiment, before the system information of the target server is collected, it is likewise necessary to install a system capacity expansion resident program on the target server, the system capacity expansion resident program is set to send a capacity expansion request message to the main control server. Thus, a system capacity expansion main program in the main control server is initiated, and the main control server receives the installation request message via the initiated system capacity expansion main program, and sets up a communication link between the system capacity expansion main program and the system capacity expansion resident program.

It is important to note that capacity expansion in the present embodiment may be hardware strengthening of the main control server, including, for example, improvement of memory, a hard disk and the like of the main control server. That is, the target server is the main control server. The capacity expansion may also be adding of a slave server to the NMS. When executing a capacity expansion operation with the method provided in the present embodiment, those hardware-strengthened servers in the NMS may not be determined, and whether there is an added second slave server may not be explicit. In this case, system information of all servers in the hardware-changed NMS can be collected, and accordingly, system capacity expansion resident programs can be installed on all the servers in the hardware-changed NMS. If the operator knows that some servers are hardware-strengthened and knows a serial number of the added second slave server, collection of the system information of the hardware-strengthened servers and the added second slave server can be specified. Accordingly, the system capacity expansion resident program can be installed on the original hardware-changed servers or/and the added server, to re-collect the system information of a capacity expansion target server in the NMS.

In S250, a capacity expansion template satisfying the system information is selected according to a comparison between the system information and reference information of multiple capacity expansion templates pre-configured on the main control server.

In S260, a capacity expansion operation is executed on the NMS via the first execution script and a second execution script in the selected capacity expansion template.

In the present embodiment, by installing a system capacity expansion resident program, a capacity expansion request message is sent to a main control server. System information of a target server is collected via a communication between an initiated system capacity expansion main program and the system capacity expansion resident program. A capacity expansion template is selected according to a comparison between the collected system information and reference information in multiple capacity expansion templates. Thus capacity expansion is automatically performed via the selected capacity expansion template, which is identical to that in the above-mentioned embodiment, and thus will not be elaborated herein. The difference lies in that the installed resident program and the main program initiated on the main control server are different from those during execution of the installation operation. Besides, in the process of executing the installation operation, the system information of the whole NMS needs to be collected, and in the process of executing the capacity expansion operation, the system information of the target server needs to be collected, namely to collect the strengthened hardware and software information.

It is important to note that the capacity expansion template in the present embodiment includes, in addition to the reference information in the installation template and the first execution script, a second execution script for defining data backup and data migration during capacity expansion. The present embodiment can perform capacity expansion on a related distributed NMS similarly. That is, the NMS before capacity expansion includes the main control server and the first slave server, and the target server after capacity expansion includes all servers in the hardware-changed NMS, or includes one or more of the main control server, the first slave server and the second slave server.

The embodiment of the present invention also provides a computer-readable storage medium, which stores computer-executable instructions, which are used to execute the NMS deployment method as mentioned in FIG. 1 to FIG. 3.

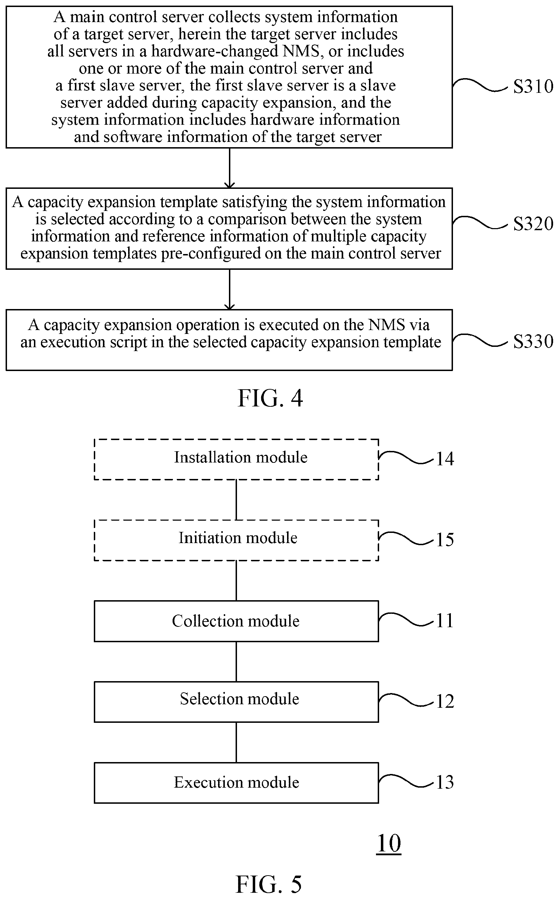

FIG. 4 is a flowchart of a yet further NMS deployment method according to an embodiment of the present invention. The NMS deployment method provided in the present embodiment is suitable for an NMS capacity expansion situation. The method may be executed by an NMS. The NMS is usually implemented by using hardware and software. The NMS in the present embodiment includes a main control server, the main control server is pre-configured with multiple capacity expansion templates, each capacity expansion template includes reference information and an execution script, and the reference information is set to indicate hardware information and software information of the NMS suitable for the capacity expansion template to which the reference information pertains. As shown in FIG. 4, the method in the present embodiment may include the steps as follows.

In S310, a main control server collects system information of a target server. The target server includes all servers in a hardware-changed NMS, or includes one or more of the main control server and a first slave server. The first slave server is a slave server added during capacity expansion, and the system information includes hardware information and software information of the target server.

In S320, a capacity expansion template satisfying the system information is selected according to a comparison between the system information and reference information of multiple capacity expansion templates pre-configured on the main control server.

In S330, a capacity expansion operation is executed on the NMS via an execution script in the selected capacity expansion template.

The method provided in the present embodiment may be used to perform capacity expansion on a related NMS. A capacity expansion manner is identical to S240 to S260 in the embodiment as shown in FIG. 3, and thus will not be elaborated herein. It is important to note that the collected system information in the present embodiment may be system information of all servers in a hardware-changed NMS similarly, and may also be system information of an original server in which hardware changes or/and an added server. The execution script includes a process deployment script, a parameter adjustment script, a data backup script and a data migration script. In the present embodiment, multiple capacity expansion templates are divided in advance according to management scales of different NMSs likewise. Each capacity expansion template is configured to indicate, via the reference information, to use the management scale, the number of client accesses and occupied resources of the NMS deployed via the capacity expansion template. The reference information and the system information include a framework, the number of digits, memory and a database environment requirement of a server. Moreover, similar to the NMS installation manner in the above-mentioned embodiment, both S320 in the present embodiment and S250 in the embodiment as shown in FIG. 3 may include: comparing contents in the obtained system information with reference information in each capacity expansion template, and selecting multiple candidate capacity expansion templates of which reference information meets requirements of the system information. Thus a capacity expansion template meeting capacity expansion requirements of the NMS is selected by comparing the management scale, the number of client accesses and the occupied resources indicated by each candidate capacity expansion template with the actual management scale, the number of client accesses and occupied resources of the NMS.

It is important to note that, in the present embodiment, capacity expansion can be similarly performed on a related distributed NMS. That is, the NMS before capacity expansion includes the main control server and a second slave server, and the target server after capacity expansion includes all servers in a hardware-changed NMS, or includes one or more of the main control server, the first slave server and the second slave server.

The embodiment of the present invention also provides a computer-readable storage medium, which stores computer-executable instructions, which are used to execute the NMS deployment method as mentioned in FIG. 4.

FIG. 5 is a structure diagram of an NMS deployment device according to an embodiment of the present invention. The device provided in the present embodiment is suitable for NMS installation and capacity expansion situations. The device is usually implemented by using hardware and software and is arranged in a main control server of an NMS. The NMS in the present embodiment includes the main control server, the main control server is pre-configured with multiple installation templates, and each installation template includes reference information and a first execution script. As shown in FIG. 5, an NMS deployment device 10 in the present embodiment includes a collection module 11, a selection module 12 and an execution module 13.

Herein, the collection module 11 is configured to collect system information of an NMS, the system information includes hardware information and software information of the NMS.

During implementation of the present embodiment, the device further includes an installation module 14 and an initiation module 15. The installation module 14 is configured to install a system installation resident program on the main control server, the system installation resident program is set to send an installation request message to the main control server. The initiation module 15 is configured to initiate a system installation main program in the main control server, to make the main control server receive the installation request message via the initiated system installation main program, and set up a communication link between the system installation main program and the system installation resident program. The system installation resident program in the present embodiment similarly provides a system service, and is always in a background running state when an OS is booted after being installed, so as to subsequently communicate with a system installation main program in the main control server.

The selection module 12 is configured to select an installation template satisfying the system information according to a comparison between the system information collected by the collection module 11 and reference information of multiple installation templates pre-configured on the main control server, herein the reference information is set to indicate the hardware information and the software information of the NMS suitable for the installation template to which the reference information pertains.

It is important to note that contents of the system information collected in the present embodiment correspond to contents of reference information in an installation template. The reference information is an access condition of the installation template to which the reference information pertains, and the system information is actually-collected hardware and software information of the main control server.

The execution module 13 is configured to execute an installation operation on the NMS via a first execution script in the installation template selected by the selection module 12. The first execution script in the present embodiment may include a process deployment script and a parameter adjustment script.

The NMS deployment device 10 provided in the embodiment of the present invention is configured to execute the NMS deployment method provided in FIG. 1 according to the embodiment of the present invention, and has corresponding functional modules. The implementation principles and effects thereof are similar with those for the embodiment in FIG. 1, and will not be elaborated herein.

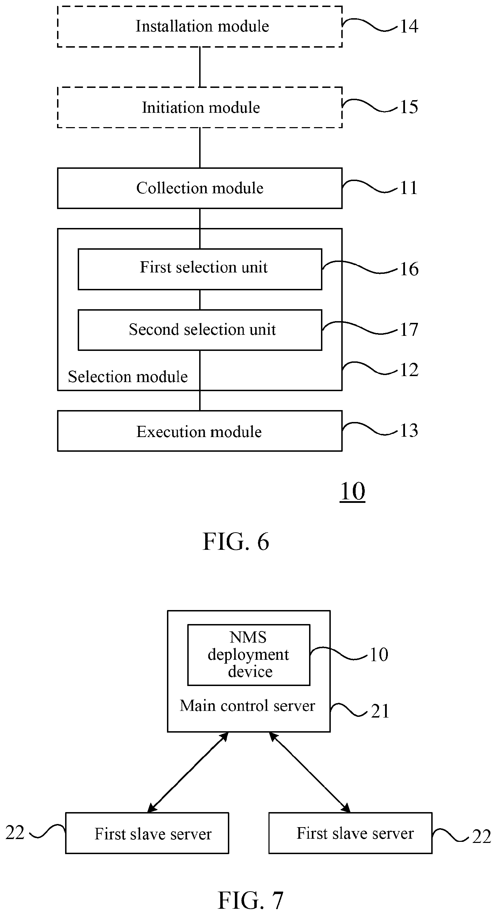

FIG. 6 is a structure diagram of another NMS deployment device according to an embodiment of the present invention. Multiple installation templates in the present embodiment are divided in advance according to management scales of different NMSs. For example, the installation templates may be already planned by a manufacturer of a main control server before delivery, or may be made by an operator according to repeated historical installation experiences and present network management scales of several typical NMSs. Each installation template is configured to indicate, via reference information, to use the management scale, the number of client accesses and occupied resources of an NMS deployed via the installation template, and the reference information in the installation template and the collected system information may include, but is not limited to, a framework, the number of digits, memory and a database environment requirement of a server. The selection module 12 in the present embodiment may include: a first selection unit 16, configured to compare contents in the obtained system information with reference information in each installation template, and select multiple candidate installation templates in which the reference information meets requirements of the system information; and a second selection unit 17, configured to select an installation template meeting installation requirements of the NMS by comparing the management scale, the number of client accesses and the occupied resources indicated by each candidate installation template selected by the first selection unit 16 with an actual management scale, number of client accesses and occupied resources of the NMS.

Alternatively, the NMS installation manner is illustrated with a standalone NMS in both the embodiments as shown in FIG. 5 and FIG. 6. The NMS deployment device 10 provided in the embodiment of the present invention may also be applied to deployment of a multi-computer NMS such as a distributed NMS. Herein, the NMS in the present embodiment further includes a first slave server, and the installation module 14 in each of the embodiments is further configured to install, before the initiation module 15 initiates a system installation main program in the main control server, the system installation resident program on the first slave server, the system installation resident program installed on the first slave server is configured with a name or IP address of the main control server. Correspondingly, the collection module 11 is configured to collect the system information of the NMS via the respective communication between the system installation main program and each system installation resident program.

It is important to note that the first slave server in the present embodiment is a part of the NMS. That is, the reference information of the installation template and the collected system information further include hardware and software information of the first slave server and a database environment standard. Moreover, in the present embodiment, the number of first slave servers is not limited. For example, there may be one or more first slave servers.

The NMS deployment device 10 provided in the embodiments as shown in FIG. 5 and FIG. 6 not only can execute an installation operation on an NMS, but also can perform capacity expansion on the installed NMS or perform capacity expansion on a related NMS. Herein, the main control server in the present embodiment is pre-configured with multiple capacity expansion templates, the multiple capacity expansion templates are divided in advance according to management scales of different NMSs similarly. Each capacity expansion template includes reference information, a first execution script and a second execution script, each capacity expansion template is configured to indicate, via the reference information, to use the management scale, the number of client accesses and occupied resources of an NMS deployed via the capacity expansion template. The reference information in the capacity expansion template is identical to the contents of the above-mentioned installation template, and requirements for hardware and software of the whole NMS also need to be defined. When the capacity expansion operation on the NMS is realized via the NMS deployment device 10 as shown in FIG. 5 and FIG. 6, an implementation manner is as follows.

The collection module 11 is further configured to collect system information of a target server via the communication between the system installation main program and each system installation resident program. Herein the target server includes all servers in a hardware-changed NMS, or includes one or more of the main control server and a second slave server, the second slave server is a slave server added during capacity expansion, and the system information includes hardware information and software information of the target server.

In the present embodiment, corresponding programs also need to be installed and initiated by the installation module 14 and the initiation module 15 before the collection module 11 collects the system information of the target server. Herein, the installation module 14 is further configured to install a system capacity expansion resident program on the target server, the system capacity expansion resident program is set to send a capacity expansion request message to the main control server. The initiation module 15 is further configured to initiate a system capacity expansion main program in the main control server, to make the main control server receive the installation request message via the initiated system capacity expansion main program, and set up a communication link between the system capacity expansion main program and the system capacity expansion resident program. In the present embodiment, capacity expansion may be hardware strengthening of the main control server, including, for example, improvement of memory, a hard disk and the like of the main control server. That is, the target server is the main control server. The capacity expansion may also be adding of a slave server to the NMS, to form a distributed NMS.

The selection module 12 is further configured to select a capacity expansion template satisfying the system information according to a comparison between the system information collected by the collection module 11 and reference information of multiple capacity expansion templates pre-configured on the main control server. Herein the reference information is set to indicate the hardware information and the software information of the target server suitable for the capacity expansion template to which the reference information pertains.

The execution module 13 is further configured to execute a capacity expansion operation on the NMS via the first execution script and a second execution script in the capacity expansion template selected by the selection module 12.

It is important to note that the capacity expansion template in the present embodiment includes, in addition to the reference information in the installation template and the first execution script, a second execution script for defining data backup and data migration during capacity expansion. The present embodiment can also perform capacity expansion on a related distributed NMS. That is, the NMS before capacity expansion includes the main control server and the first slave server, and the target server after capacity expansion includes all servers in the hardware-changed NMS, or includes one or more of the main control server, the first slave server and the second slave server.

The NMS deployment device 10 provided in the embodiment of the present invention is configured to execute the NMS deployment methods provided in FIG. 2 to FIG. 4 according to the embodiment of the present invention, and the device has corresponding functional modules. The implementation principles and effects thereof are similar with those for the previous embodiments, and will not be elaborated here.

FIG. 7 is a structure diagram of an NMS according to an embodiment of the present invention. As shown in FIG. 7, an NMS provided in the embodiment of the present invention may include a main control server 21 or includes a main control server 21 and a first slave server 22. When only the main control server 21 is included, the NMS is a standalone server system. FIG. 7 shows an example that the NMS includes two first slave servers 22. Before execution of NMS deployment, system installation resident programs or system capacity expansion resident programs are installed in the main control server 21 and each first slave server 22 according to the type of an operation which needs to be executed on the NMS. The resident programs will run as system services, will always reside in memory of the server after an OS is booted, and communicate with a system installation main program or a system capacity expansion main program on the main control server to complete actions such as system information collection of the NMS, system software installation, data synchronization and system and database parameter adjustment. Herein, the main control server 21 is provided with any one NMS deployment device 10 in each embodiment as shown in FIG. 5 and FIG. 6. The NMS is configured to execute an installation operation or a capacity expansion operation through the method provided in each embodiment as shown in FIG. 1 to FIG. 4. The implementation manner and implemented beneficial effects are identical to those in the above-mentioned embodiments, and will not be elaborated herein.

Those of ordinary skill in the art may understand that all or some steps in the above-mentioned method may be completed by instructing relevant hardware via a program, and the program may be stored in a computer-readable storage medium such as a read-only memory, a magnetic disk or an optical disk. Alternatively, all or some steps in the above-mentioned embodiments may also be implemented by using one or more integrated circuits. Correspondingly, each module/unit in the above-mentioned embodiments may be implemented in a form of hardware or may be implemented in a form of software function module. The present invention is not limited to combination of hardware and software in any specific form.

The above is only alternative embodiments of the present invention. Certainly, the present invention may also have various other embodiments. Those skilled in the art may make various corresponding variations and transformations according to the present invention without departing from the rule and essence of the present invention, but these corresponding variations and transformations shall fall within the protection scope of the appended claims of the present invention.

### Industrial Applicability

The present scheme may solve the problems in the related art of low efficiency and complex implementation of NMS deployment caused by an operator needing to set related parameters for an NMS to be deployed in an NMS deployment process.

## Claims

1. A Network Management System, NMS, deployment method, wherein a NMS executing the NMS deployment method comprises a main control server (21), **characterized in that** the method comprises:
installing a system installation resident program on the main control server, wherein the system installation resident program is set to send an installation request message to the main control server; and, initiating a system installation main program in the main control server, wherein the main control server receives the installation request message from the system installation resident program via the system installation main program, and sets up a communication link between the system installation main program and the system installation resident program;
collecting (SI 10, S210), by the main control server, system information of the NMS via a data channel of the communication link between the system installation main program and the system installation resident program, wherein the system information comprises hardware information and software information of the NMS;
selecting (S120, S220) an installation template satisfying the system information according to a comparison between the system information and reference information of a plurality of installation templates pre-configured on the main control server, wherein the reference information is set to indicate the hardware information and the software information of the NMS suitable for an installation template to which the reference information pertains; and
executing (S130, S230) an installation operation on the NMS via a first execution script in the selected installation template by a running of the system installation main program and the communication between the system installation main program and the system installation resident program as well as installation actions defined in the installation template, wherein the first execution script includes a process deployment script and a parameter adjustment script.

2. The NMS deployment method according to claim 1, wherein the plurality of installation templates are divided in advance according to management scales of different NMSs, each of the plurality of installation templates is configured to indicate, via the reference information, to use a management scale, a number of client accesses and occupied resources of an NMS deployed via the installation template, and the reference information and the system information comprise a framework, a number of digits, memory and a database environment requirement of a server;
selecting (S130, S230) an installation template satisfying the system information according to a comparison between the system information and reference information of a plurality of installation templates comprises:
comparing (S121) contents in the collected system information with reference information in each of the plurality of installation templates, and selecting a plurality of candidate installation templates in which the reference information meets requirements of the system information; and
selecting (S122) an installation template meeting installation requirements of the NMS by comparing the management scale, the number of client accesses and the occupied resources indicated by each of the plurality of candidate installation templates with an actual management scale, number of client accesses and occupied resources of the NMS.

3. The NMS deployment method according to claim 1, wherein the NMS further comprises a first slave server (22), and before initiating a system installation main program in the main control server, the method further comprises:
installing the system installation resident program on the first slave server, wherein the system installation resident program installed on the first slave server is configured with a name or Internet Protocol, IP, address of the main control server; and
the step of collecting, by the main control server, the system information of the NMS via the data channel of the communication link between the system installation main program and the system installation resident program comprises:
collecting, by the main control server, the system information of the NMS via the respective communication between the system installation main program and each system installation resident program.

4. The NMS deployment method according to any one of claims 1 to 3, wherein the first execution script comprises a process deployment script and a parameter adjustment script.

5. The NMS deployment method according to claim 1 or 2, further comprising:
collecting (S240, S310), by the main control server, system information of a target server, wherein the target server comprises all servers in a hardware-changed NMS, or comprises one or more of the main control server and a second slave server, the second slave server is a slave server added during capacity expansion, and the system information comprises hardware information and software information of the target server;
selecting (S250, S320) a capacity expansion template satisfying the system information according to a comparison between the system information and reference information of a plurality of capacity expansion templates pre-configured on the main control server, wherein the reference information is set to indicate the hardware information and the software information of the target server suitable for a capacity expansion template to which the reference information pertains; and
executing (S260, S330) a capacity expansion operation on the NMS via the first execution script and a second execution script in the selected capacity expansion template.

6. The NMS deployment method according to claim 5, wherein before the main control server collects system information of the target server, the method further comprises:
installing a system capacity expansion resident program on the target server, wherein the system capacity expansion resident program is set to send a capacity expansion request message to the main control server; and
initiating a system capacity expansion main program in the main control server, wherein the main control server receives the installation request message via the initiated system capacity expansion main program, and sets up a communication link between the system capacity expansion main program and the system capacity expansion resident program,
wherein the NMS further comprises a first slave server, and the target server comprises all servers in the hardware-changed NMS, or comprises one or more of the main control server, the first slave server and the second slave server; and/or,
the plurality of capacity expansion templates are divided in advance according to management scales of different NMSs, each of the plurality of capacity expansion templates is configured to indicate, via the reference information, to use a management scale, a number of client accesses and occupied resources of an NMS deployed via the capacity expansion template, and the second execution script comprises a data backup script and a data migration script.

7. A Network Management System, NMS, deployment device, wherein the NMS deployment device is arranged in a main control server (21) of an NMS, **characterized in that** the device comprises an installation module (14), an initiation module (15), a collection module (11), a selection module (12) and an execution module (13), wherein
the installation module (14) is configured to install, before the collection module collects system information of the NMS, a system installation resident program on the main control server, wherein system installation resident program is set to send an installation request message to the main control server;
the initiation module (15) is configured to initiate a system installation main program in the main control server, to make the main control server receive the installation request message via the initiated system installation main program, and set up a communication link between the system installation main program and the system installation resident program;
the collection module (11) is configured to collect system information of the NMS via a data channel of the communication link, wherein the system information comprises hardware information and software information of the NMS;
the selection module (12) is configured to select an installation template satisfying the system information according to a comparison between the system information collected by the collection module and reference information of a plurality of installation templates pre-configured on the main control server, wherein the reference information is set to indicate the hardware information and the software information of the NMS suitable for an installation template to which the reference information pertains; and
the execution module (13) is configured to execute an installation operation on the NMS via a first execution script in the installation template selected by the selection module by a running of the system installation main program and the communication between the system installation main program and the system installation resident program as well as installation actions defined in the installation template, wherein the first execution script includes a process deployment script and a parameter adjustment script.

8. The NMS deployment device according to claim 7, wherein the plurality of installation templates are divided in advance according to management scales of different NMSs, each of the plurality of installation templates is configured to indicate, via the reference information, to use a management scale, a number of client accesses and occupied resources of an NMS deployed via the installation template, and the reference information and the system information comprise a framework, a number of digits, memory and a database environment requirement of a server; and
the selection module (12) comprises: a first selection unit (16), configured to compare contents in the collected system information with reference information in each of the plurality of installation templates, and select a plurality of candidate installation templates in which the reference information meets requirements of the system information; and a second selection unit (17), configured to select an installation template meeting installation requirements of the NMS by comparing the management scale, the number of client accesses and the occupied resources indicated by each of the plurality of candidate installation templates selected by the first selection unit with an actual management scale, number of client accesses and occupied resources of the NMS.

9. The NMS deployment device according to claim 7, wherein the NMS further comprises a first slave server (22); the installation module (14) is further configured to install, before the initiation module initiates a system installation main program in the main control server, the system installation resident program on the first slave server, wherein the system installation resident program installed on the first slave server is configured with a name or Internet Protocol, IP, address of the main control server; and
the collection module (11) is configured to collect the system information of the NMS via the respective communication between the system installation main program and each system installation resident program.

10. The NMS deployment device according to any one of claims 7 to 9, wherein the first execution script comprises a process deployment script and a parameter adjustment script.

11. The NMS deployment device according to claim 7 or 8, wherein the collection module (11) is further configured to collect system information of a target server, wherein the target server comprises all servers in a hardware-changed NMS, or comprises one or more of the main control server and a second slave server, the second slave server is a slave server added during capacity expansion, and the system information comprises hardware information and software information of the target server;
the selection module (12) is further configured to select a capacity expansion template satisfying the system information according to a comparison between the system information collected by the collection module and reference information of a plurality of capacity expansion templates pre-configured on the main control server, wherein the reference information is set to indicate the hardware information and the software information of the target server suitable for a capacity expansion template to which the reference information pertains; and
the execution module (13) is further configured to execute a capacity expansion operation on the NMS via the first execution script and a second execution script in the capacity expansion template selected by the selection module,
wherein the installation module (14) is further configured to install, before the collection module collects system information of the target server, a system capacity expansion resident program on the target server, wherein the system capacity expansion resident program is set to send a capacity expansion request message to the main control server; and
the initiation module (15) is further configured to initiate a system capacity expansion main program in the main control server, to make the main control server receive the installation request message via the initiated system capacity expansion main program, and set up a communication link between the system capacity expansion main program and the system capacity expansion resident program;
wherein the NMS further comprises a first slave server (22), and the target server comprises all servers in the hardware-changed NMS, or comprises one or more of the main control server, the first slave server and the second slave server; and/or,
the plurality of capacity expansion templates are divided in advance according to management scales of different NMSs, each of the plurality of capacity expansion templates is configured to indicate, via the reference information, to use a management scale, a number of client accesses and occupied resources of an NMS deployed via the capacity expansion template, and the second execution script comprises a data backup script and a data migration script.

12. A computer-readable storage medium, storing computer-executable instructions, which are used to execute the NMS deployment method according to any one of claims 1 to 6.

## Patentansprüche

1. Verfahren für den Einsatz eines Netzwerkverwaltungssystems, NMS, wobei ein NMS, das das Verfahren für den Einsatz eines NMS ausführt, einen Hauptsteuerserver (21) umfasst, **dadurch gekennzeichnet, dass** das Verfahren Folgendes umfasst:
Installieren eines residenten Systeminstallationsprogramms auf dem Hauptsteuerserver, wobei das residente Systeminstallationsprogramm festgelegt ist, um eine Installationsanforderungsnachricht an den Hauptsteuerserver zu senden; und Initiieren eines Systeminstallationshauptprogramms in dem Hauptsteuerserver, wobei der Hauptsteuerserver die Installationsanforderungsnachricht von dem residenten Systeminstallationsprogramm über das Systeminstallationshauptprogramm empfängt und eine Kommunikationsverbindung zwischen dem Systeminstallationshauptprogramm und dem residenten Systeminstallationsprogramm einrichtet;
Sammeln (S110, S210), durch den Hauptsteuerserver, von Systeminformationen des NMS über einen Datenkanal der Kommunikationsverbindung zwischen dem Systeminstallationshauptprogramm und dem residenten Systeminstallationsprogramm, wobei die Systeminformationen Hardware-Informationen und Software-Informationen des NMS umfassen;
Auswählen (S120, S220) eines Installations-Templates, das die Systeminformationen erfüllt, gemäß einem Vergleich zwischen den Systeminformationen und Referenzinformationen einer Vielzahl von auf dem Hauptsteuerserver vorkonfigurierten Installations-Templates, wobei die Referenzinformationen festgelegt sind, um die Hardware-Informationen und die Software-Informationen des NMS anzugeben, das für ein Installations-Template geeignet ist, auf das sich die Referenzinformationen beziehen; und
Ausführen (S130, S230) eines Installationsvorgangs an dem NMS über ein erstes Ausführungsscript in dem ausgewählten Installations-Template durch ein Abspielen des Systeminstallationshauptprogramms und die Kommunikation zwischen dem Systeminstallationshauptprogramm und dem residenten Systeminstallationsprogramm sowie Installationshandlungen, die in dem Installations-Template definiert sind, wobei das erste Ausführungsscript ein Prozesseinsatzscript und ein Parametereinstellungsscript beinhaltet.

2. Verfahren für den Einsatz eines NMS nach Anspruch 1, wobei die Vielzahl von Installations-Templates im Voraus gemäß Verwaltungsskalen unterschiedlicher NMS geteilt wird, wobei jedes aus der Vielzahl von Installations-Templates konfiguriert ist, um über die Referenzinformationen die Verwendung einer Verwaltungsskala, eine Anzahl an Client-Zugriffen und belegte Ressourcen eines NMS anzugeben, das über das Installations-Template eingesetzt wird, und die Referenzinformationen und die Systeminformationen ein Framework, eine Anzahl an Digits, Speicher und eine Datenbankumgebungsanforderung eines Servers umfassen;
wobei das Auswählen (S130, S230) eines Installations-Templates, das die Systeminformationen erfüllt, gemäß einem Vergleich zwischen den Systeminformationen und Referenzinformationen einer Vielzahl von Installations-Templates, Folgendes umfasst:
Vergleichen (S121) von Inhalten in den gesammelten Systeminformationen mit Referenzinformationen in jedem aus der Vielzahl von Installations-Templates, und Auswählen einer Vielzahl von Kandidateninstallations-Templates, in denen die Referenzinformationen Anforderungen der Systeminformationen erfüllen; und
Auswählen (S122) eines Installations-Templates, das Installationsanforderungen des NMS erfüllt, durch Vergleichen der Verwaltungsskala, der Anzahl an Client-Zugriffen und der belegten Ressourcen, die durch jedes aus der Vielzahl von Kandidateninstallations-Templates angegeben werden, mit (einer) tatsächlichen Verwaltungsskala, Anzahl an Client-Zugriffen und belegten Ressourcen des NMS.

3. Verfahren für den Einsatz eines NMS nach Anspruch 1, wobei das NMS ferner einen ersten Slave-Server (22) umfasst, und das Verfahren vor dem Initiieren eines Systeminstallationshauptprogramms in dem Hauptsteuerserver ferner Folgendes umfasst:
Installieren des residenten Systeminstallationsprogramms auf dem ersten Slave-Server, wobei das residente Systeminstallationsprogramm, das auf dem ersten Slave-Server installiert wird, mit einem Namen oder einer Internetprotokoll-(IP-)Adresse des Hauptsteuerservers konfiguriert ist, und
der Schritt des Sammelns der Systeminformationen des NMS über den Datenkanal der Kommunikationsverbindung zwischen dem Systeminstallationshauptprogramm und dem residenten Systeminstallationsprogramm durch den Hauptsteuerserver Folgendes umfasst:
Sammeln, durch den Hauptsteuerserver, der Systeminformationen des NMS über die jeweilige Kommunikation zwischen dem Systeminstallationshauptprogramm und jedem residenten Systeminstallationsprogramm.

4. Verfahren für den Einsatz eines NMS nach einem der Ansprüche 1 bis 3, wobei das erste Ausführungsscript ein Prozesseinsatzscript und ein Parametereinstellungsscript umfasst.

5. Verfahren für den Einsatz eines NMS nach Anspruch 1 oder 2, ferner umfassend:
Sammeln (S240, S310), durch den Hauptsteuerserver, von Systeminformationen eines Zielservers, wobei der Zielserver alle Server in einem Hardware-geänderten NMS umfasst oder einen oder mehrere von dem Hauptsteuerserver und einem zweiten Slave-Server umfasst, wobei der zweite Slave-Server ein Slave-Server ist, der während Kapazitätserweiterung hinzugefügt wird, und die Systeminformationen Hardware-Informationen und Software-Informationen des Zielservers umfassen;
Auswählen (S250, S320) eines Kapazitätserweiterungs-Templates, das die Systeminformationen erfüllt, gemäß einem Vergleich zwischen den Systeminformationen und Referenzinformationen einer Vielzahl von auf dem Hauptsteuerserver vorkonfigurierten Kapazitätserweiterungs-Templates, wobei die Referenzinformationen festgelegt sind, um die Hardware-Informationen und die Software-Informationen des Zielservers anzugeben, der für ein Kapazitätserweiterungs-Template geeignet ist, auf das sich die Referenzinformationen beziehen; und
Ausführen (S260, S330) eines Kapazitätserweiterungsvorgangs an dem NMS über das erste Ausführungsscript und ein zweites Ausführungsscript in dem ausgewählten Kapazitätserweiterungs-Template.

6. Verfahren für den Einsatz eines NMS nach Anspruch 5, wobei das Verfahren, bevor der Hauptsteuerserver Systeminformationen des Zielservers sammelt, ferner Folgendes umfasst:
Installieren eines residenten Systemkapazitätserweiterungsprogramms auf dem Zielserver, wobei das residente Systemkapazitätserweiterungsprogramm festgelegt ist, um eine Kapazitätserweiterungsanforderungsnachricht an den Hauptsteuerserver zu senden; und
Initiieren eines Systemkapazitätserweiterungshauptprogramms in dem Hauptsteuerserver, wobei der Hauptsteuerserver die Installationsanforderungsnachricht über das initiierte Systemkapazitätserweiterungshauptprogramm empfängt und eine Kommunikationsverbindung zwischen dem Systemkapazitätserweiterungshauptprogramm und dem residenten Systemkapazitätserweiterungsprogramm einrichtet,
wobei das NMS ferner einen ersten Slave-Server umfasst und der Zielserver alle Server in dem Hardware-geänderten NMS umfasst oder einen oder mehrere von dem Hauptsteuerserver, dem ersten Slave-Server und dem zweiten Slave-Server umfasst; und/oder
die Vielzahl von Kapazitätserweiterungs-Templates im Voraus gemäß Verwaltungsskalen unterschiedlicher NMS geteilt wird, wobei jedes aus der Vielzahl von Kapazitätserweiterungs-Templates konfiguriert ist, um über die Referenzinformationen die Verwendung einer Verwaltungsskala, eine Anzahl an Client-Zugriffen und belegte Ressourcen eines NMS anzugeben, das über das Kapazitätserweiterungs-Template eingesetzt wird, und das zweite Ausführungsscript ein Datenbackupscript und ein Datenmigrationsscript umfasst.

7. Vorrichtung für den Einsatz eines Netzwerkverwaltungssystems, NMS, wobei die Vorrichtung für den Einsatz eines NMS in einem Hauptsteuerserver (21) eines NMS angeordnet ist, **dadurch gekennzeichnet, dass** die Vorrichtung ein Installationsmodul (14), ein Initialisierungsmodul (15), ein Sammelmodul (11), ein Auswahlmodul (12) und ein Ausführungsmodul (13) umfasst, wobei das Installationsmodul (14) konfiguriert ist, um, bevor das Sammelmodul Systeminformationen des NMS sammelt, ein residentes Systeminstallationsprogramm auf dem Hauptsteuerserver zu installieren, wobei das residente Systeminstallationsprogramm festgelegt ist, um eine Installationsanforderungsnachricht an den Hauptsteuerserver zu senden;
das Initialisierungsmodul (15) konfiguriert ist, um ein Systeminstallationshauptprogramm in dem Hauptsteuerserver zu initiieren, um zu bewirken, dass der Hauptsteuerserver die Installationsanforderungsnachricht über das initiierte Systeminstallationshauptprogramm empfängt, und eine Kommunikationsverbindung zwischen dem Systeminstallationshauptprogramm und dem residenten Systeminstallationsprogramm einzurichten;
das Sammelmodul (11) konfiguriert ist, um Systeminformationen des NMS über einen Datenkanal der Kommunikationsverbindung zu sammeln, wobei die Systeminformationen Hardware-Informationen und Software-Informationen des NMS umfassen;
das Auswahlmodul (12) konfiguriert ist, um ein Installations-Template auszuwählen, das die Systeminformationen erfüllt, gemäß einem Vergleich zwischen den durch das Sammelmodul gesammelten Systeminformationen und Referenzinformationen einer Vielzahl von auf dem Hauptsteuerserver vorkonfigurierten Installations-Templates, wobei die Referenzinformationen festgelegt sind, um die Hardware-Informationen und die Software-Informationen des NMS anzugeben, das für ein Installations-Template geeignet ist, auf das sich die Referenzinformationen beziehen; und
das Ausführungsmodul (13) konfiguriert ist, um einen Installationsvorgang an dem NMS über ein erstes Ausführungsscript in dem durch das Auswahlmodul ausgewählten Installations-Template auszuführen, durch ein Abspielen des Systeminstallationshauptprogramms und die Kommunikation zwischen dem Systeminstallationshauptprogramm und dem residenten Systeminstallationsprogramm sowie Installationshandlungen, die in dem Installations-Template definiert sind, wobei das erste Ausführungsscript ein Prozesseinsatzscript und ein Parametereinstellungsscript beinhaltet.

8. Vorrichtung für den Einsatz eines NMS nach Anspruch 7, wobei die Vielzahl von Installations-Templates im Voraus gemäß Verwaltungsskalen unterschiedlicher NMS geteilt wird, wobei jedes aus der Vielzahl von Installations-Templates konfiguriert ist, um über die Referenzinformationen die Verwendung einer Verwaltungsskala, eine Anzahl an Client-Zugriffen und belegte Ressourcen eines NMS anzugeben, das über das Installations-Template eingesetzt wird, und die Referenzinformationen und die Systeminformationen ein Framework, eine Anzahl an Digits, Speicher und eine Datenbankumgebungsanforderung eines Servers umfassen; und
das Auswahlmodul (12) Folgendes umfasst: eine erste Auswahleinheit (16), die konfiguriert ist, um Inhalte in den gesammelten Systeminformationen mit Referenzinformationen in jedem aus der Vielzahl von Installations-Templates zu vergleichen und eine Vielzahl von Kandidateninstallations-Templates auszuwählen, in denen die Referenzinformationen Anforderungen der Systeminformationen erfüllen; und eine zweite Auswahleinheit (17), die konfiguriert ist, um ein Installations-Template auszuwählen, das Installationsanforderungen des NMS erfüllt, indem die Verwaltungsskala, die Anzahl an Client-Zugriffen und die belegten Ressourcen, die durch jedes aus der Vielzahl von durch die erste Auswahleinheit ausgewählten Kandidateninstallations-Templates angegeben werden, mit (einer) tatsächlichen Verwaltungsskala, Anzahl an Client-Zugriffen und belegten Ressourcen des NMS verglichen werden.

9. Vorrichtung für den Einsatz eines NMS nach Anspruch 7, wobei das NMS ferner einen ersten Slave-Server (22) umfasst; wobei das Installationsmodul (14) ferner konfiguriert ist, um, bevor das Initiierungsmodul ein Systeminstallationshauptprogramm in dem Hauptsteuerserver initiiert, das residente Systeminstallationsprogramm auf dem ersten Slave-Server zu installieren, wobei das residente Systeminstallationsprogramm, das auf dem ersten Slave-Server installiert wird, mit einem Namen oder einer Internetprotokoll-(IP-)Adresse des Hauptsteuerservers konfiguriert ist; und
das Sammelmodul (11) konfiguriert ist, um die Systeminformationen des NMS über die jeweilige Kommunikation zwischen dem Systeminstallationshauptprogramm und jedem residenten Systeminstallationsprogramm zu sammeln.

10. Vorrichtung für den Einsatz eines NMS nach einem der Ansprüche 7 bis 9, wobei das erste Ausführungsscript ein Prozesseinsatzscript und ein Parametereinstellungsscript umfasst.

11. Vorrichtung für den Einsatz eines NMS nach Anspruch 7 oder 8, wobei das Sammelmodul (11) ferner konfiguriert ist, um Systeminformationen eines Zielservers zu sammeln, wobei der Zielserver alle Server in einem Hardware-geänderten NMS umfasst oder einen oder mehrere von dem Hauptsteuerserver und einem zweiten Slave-Server umfasst, wobei der zweite Slave-Server ein Slave-Server ist, der während Kapazitätserweiterung hinzugefügt wird und die Systeminformationen Hardware-Informationen und Software-Informationen des Zielservers umfassen;
wobei das Auswahlmodul (12) ferner konfiguriert ist, um ein Kapazitätserweiterungs-Template auszuwählen, das die Systeminformationen erfüllt, gemäß einem Vergleich zwischen den durch das Sammelmodul gesammelten Systeminformationen und Referenzinformationen einer Vielzahl von auf dem Hauptsteuerserver vorkonfigurierten Kapazitätserweiterungs-Templates, wobei die Referenzinformationen festgelegt sind, um die Hardware-Informationen und die Software-Informationen des Zielservers anzugeben, der für ein Kapazitätserweiterungs-Template geeignet ist, auf das sich die Referenzinformationen beziehen; und
das Ausführungsmodul (13) ferner konfiguriert ist, um einen Kapazitätserweiterungsvorgang an dem NMS über das erste Ausführungsscript und ein zweites Ausführungsscript in dem durch das Auswahlmodul ausgewählten Kapazitätserweiterungs-Template auszuführen,
wobei das Installationsmodul (14) ferner konfiguriert ist, um, bevor das Sammelmodul Systeminformationen des Zielservers sammelt, ein residentes Systemkapazitätserweiterungsprogramm auf dem Zielserver zu installieren, wobei das residente Systemkapazitätserweiterungsprogramm festgelegt ist, um eine Kapazitätserweiterungsanforderungsnachricht an den Hauptsteuerserver zu senden; und
das Initiierungsmodul (15) ferner konfiguriert ist, um ein Systemkapazitätserweiterungshauptprogramm in dem Hauptsteuerserver zu initiieren, um zu bewirken, dass der Hauptsteuerserver die Installationsanforderungsnachricht über das initiierte Systemkapazitätserweiterungshauptprogramm empfängt, und eine Kommunikationsverbindung zwischen dem Systemkapazitätserweiterungshauptprogramm und dem residenten Systemkapazitätserweiterungsprogramm einzurichten;
wobei das NMS ferner einen ersten Slave-Server (22) umfasst und der Zielserver alle Server in dem Hardware-geänderten NMS umfasst oder einen oder mehrere von dem Hauptsteuerserver, dem ersten Slave-Server und dem zweiten Slave-Server umfasst; und/oder
die Vielzahl von Kapazitätserweiterungs-Templates im Voraus gemäß Verwaltungsskalas unterschiedlicher NMS geteilt wird, wobei jedes aus der Vielzahl von Kapazitätserweiterungs-Templates konfiguriert ist, um über die Referenzinformationen die Verwendung einer Verwaltungsskala, eine Anzahl an Client-Zugriffen und belegte Ressourcen eines NMS anzugeben, das über das Kapazitätserweiterungs-Template eingesetzt wird, und das zweite Ausführungsscript ein Datenbackupscript und ein Datenmigrationsscript umfasst.

12. Computerlesbares Speichermedium, auf dem computerausführbare Anweisungen gespeichert sind, die verwendet werden, um das Verfahren für den Einsatz eines NMS nach einem der Ansprüche 1 bis 6 auszuführen.

## Revendications

1. Procédé de déploiement d'un système de gestion de réseau, NMS, dans lequel un NMS exécutant le procédé de déploiement de NMS comprend un serveur de contrôle principal (21), **caractérisé en ce que** le procédé comprend :
l'installation d'un programme résident d'installation de système sur le serveur de contrôle principal, dans lequel le programme résident d'installation de système est configuré pour envoyer un message de demande d'installation au serveur de contrôle principal ; et le démarrage d'un programme principal d'installation de système dans le serveur de contrôle principal, dans lequel le serveur de contrôle principal reçoit le message de demande d'installation provenant du programme résident d'installation de système via le programme principal d'installation de système, et établit un lien de communication entre le programme principal d'installation de système et le programme résident d'installation de système ;
la collecte (S110, S210), par le serveur de contrôle principal, des informations système du NMS via un canal de données du lien de communication entre le programme principal d'installation de système et le programme résident d'installation de système, dans lequel les informations système comprennent des informations matérielles et des informations logicielles du NMS ;
la sélection (S120, S220) d'un modèle d'installation satisfaisant les informations système conformément à une comparaison entre les informations système et les informations de référence d'une pluralité de modèles d'installation préconfigurés sur le serveur de contrôle principal, dans lequel les informations de référence sont configurées pour indiquer les informations matérielles et les informations logicielles du NMS qui conviennent à un modèle d'installation auquel les informations de référence se rapportent ; et
l'exécution (S130, S230) d'une opération d'installation sur le NMS via un premier script d'exécution dans le modèle d'installation sélectionné, à travers une exécution du programme principal d'installation de système et de la communication entre le programme principal d'installation de système et le programme résident d'installation de système, ainsi que d'actions d'installation définies dans le modèle d'installation, dans lequel le premier script d'exécution comprend un script de déploiement de processus et un script de réglage de paramètre.

2. Procédé de déploiement de NMS selon la revendication 1, dans lequel la pluralité de modèles d'installation est divisée à l'avance en fonction d'échelles de gestion de différents NMS, chacun de la pluralité de modèles d'installation est configuré pour indiquer, via les informations de référence, d'utiliser une échelle de gestion, un nombre d'accès clients et de ressources occupées d'un NMS déployé via le modèle d'installation, et les informations de référence et les informations système comprennent un cadre, un nombre de chiffres, une mémoire et une exigence d'environnement de base de données d'un serveur ;
la sélection (S130, S230) d'un modèle d'installation satisfaisant les informations système conformément à une comparaison entre les informations système et les informations de référence d'une pluralité de modèles d'installation comprend :
la comparaison (S121) du contenu dans les informations système collectées avec les informations de référence dans chacun de la pluralité de modèles d'installation, et la sélection d'une pluralité de modèles d'installation candidats dans lesquels les informations de référence répondent aux exigences des informations système ; et
la sélection (S122) d'un modèle d'installation répondant aux exigences d'installation du NMS en comparant l'échelle de gestion, le nombre d'accès clients et les ressources occupées indiquées par chacun de la pluralité de modèles d'installation candidats avec une échelle de gestion réelle, un nombre d'accès clients et les ressources occupées du NMS.

3. Procédé de déploiement de NMS selon la revendication 1, dans lequel le NMS comprend en outre un premier serveur esclave (22), et avant de démarrer un programme principal d'installation de système dans le serveur de contrôle principal, le procédé comprend en outre :
l'installation du programme résident d'installation de système sur le premier serveur esclave, dans lequel le programme résident d'installation de système installé sur le premier serveur esclave est configuré avec un nom ou une adresse de protocole Internet, IP, du serveur de contrôle principal ; et
l'étape de collecte, par le serveur de contrôle principal, des informations système du NMS via le canal de données du lien de communication entre le programme principal d'installation de système et le programme résident d'installation de système comprend :
la collecte, par le serveur de contrôle principal, des informations système du NMS via la communication respective entre le programme principal d'installation de système et chaque programme résident d'installation de système.

4. Procédé de déploiement de NMS selon l'une quelconque des revendications 1 à 3, dans lequel le premier script d'exécution comprend un script de déploiement de processus et un script de réglage de paramètre.

5. Procédé de déploiement de NMS selon la revendication 1 ou 2, comprenant en outre :
la collecte (S240, S310), par le serveur de contrôle principal, des informations système d'un serveur cible, dans lequel le serveur cible comprend tous les serveurs dans un NMS à configuration matérielle modifiée, ou comprend un ou plusieurs du serveur de contrôle principal et d'un second serveur esclave, le second serveur esclave est un serveur esclave ajouté lors de l'augmentation de capacité, et les informations système comprennent des informations matérielles et des informations logicielles du serveur cible ;
la sélection (S250, S320) d'un modèle d'augmentation de capacité satisfaisant les informations système conformément à une comparaison entre les informations système et les informations de référence d'une pluralité de modèles d'augmentation de capacité préconfigurés sur le serveur de contrôle principal, dans lequel les informations de référence sont configurées pour indiquer les informations matérielles et les informations logicielles du serveur cible qui conviennent à un modèle d'augmentation de capacité auquel les informations de référence se rapportent ; et
l'exécution (S260, S330) d'une opération d'augmentation de capacité sur le NMS via le premier script d'exécution et un second script d'exécution dans le modèle d'augmentation de capacité sélectionné.

6. Procédé de déploiement de NMS selon la revendication 5, dans lequel avant que le serveur de contrôle principal collecte les informations système du serveur cible, le procédé comprend en outre :
l'installation d'un programme résident d'augmentation de capacité de système sur le serveur cible, dans lequel le programme résident d'augmentation de capacité de système est configuré pour envoyer un message de demande d'augmentation de capacité au serveur de contrôle principal ; et
le démarrage d'un programme principal d'augmentation de capacité de système dans le serveur de contrôle principal, dans lequel le serveur de contrôle principal reçoit le message de demande d'installation via le programme principal d'augmentation de capacité de système démarré, et établit un lien de communication entre le programme principal d'augmentation de capacité de système et le programme résident d'augmentation de capacité de système ;
dans lequel le NMS comprend en outre un premier serveur esclave, et le serveur cible comprend tous les serveurs dans le NMS à configuration matérielle modifiée, ou comprend un ou plusieurs du serveur de contrôle principal, du premier serveur esclave et du second serveur esclave ; et/ou
la pluralité de modèles d'augmentation de capacité sont divisés à l'avance en fonction d'échelles de gestion de différents NMS, chacun de la pluralité de modèles d'augmentation de capacité est configuré pour indiquer, via les informations de référence, d'utiliser une échelle de gestion, un nombre d'accès clients et les ressources occupées d'un NMS déployé via le modèle d'augmentation de capacité, et le second script d'exécution comprend un script de sauvegarde de données et un script de migration de données.

7. Dispositif de déploiement d'un système de gestion de réseau, NMS, dans lequel le dispositif de déploiement de NMS est agencé dans un serveur de contrôle principal (21) d'un NMS, **caractérisé en ce que** le dispositif comprend un module d'installation (14), un module de démarrage (15), un module de collecte (11), un module de sélection (12) et un module d'exécution (13), dans lequel
le module d'installation (14) est configuré pour installer, avant que le module de collecte collecte les informations système du NMS, un programme résident d'installation sur le serveur de contrôle principal, dans lequel le programme résident d'installation de système est configuré pour envoyer un message de demande d'installation au serveur de contrôle principal ;
le module de démarrage (15) est configuré pour démarrer un programme principal d'installation de système dans le serveur de contrôle principal, pour faire en sorte que le serveur de contrôle principal reçoive le message de demande d'installation via le programme principal d'installation de système démarré, et établisse un lien de communication entre le programme principal d'installation de système et le programme résident d'installation de système ;
le module de configuration (11) est configuré pour collecter des informations système du NMS via un canal de données du lien de communication, dans lequel les informations système comprennent des informations matérielles et des informations logicielles du NMS ;
le module de sélection (12) est configuré pour sélectionner un modèle d'installation satisfaisant les informations système conformément à une comparaison entre les informations système collectées par le module de collecte et les informations de référence d'une pluralité de modèles d'installation préconfigurés sur le serveur de contrôle principal, dans lequel les informations de référence sont configurées pour indiquer les informations matérielles et les informations logicielles du NMS qui conviennent à un modèle d'installation auquel les informations de référence se rapportent ; et
le module d'exécution (13) est configuré pour exécuter une opération d'installation sur le NMS via un premier script d'exécution dans le modèle d'installation sélectionné par le module de sélection, à travers une exécution du programme principal d'installation de système et de la communication entre le programme principal d'installation de système et le programme résident d'installation de système, ainsi que d'actions d'installation définies dans le modèle d'installation, dans lequel le premier script d'exécution comprend un script de déploiement de processus et un script de réglage de paramètre.

8. Dispositif de déploiement de NMS selon la revendication 7, dans lequel la pluralité de modèles d'installation sont divisés à l'avance en fonction d'échelles de gestion de différents NMS, chacun de la pluralité de modèles d'installation est configuré pour indiquer, via les informations de référence, d'utiliser une échelle de gestion, un nombre d'accès clients et les ressources occupées d'un NMS déployé via le modèle d'installation, et les informations de référence et les informations système comprennent un cadre, un nombre de chiffres, une mémoire et une exigence d'environnement de base de données d'un serveur ; et
le module de sélection (12) comprend : une première unité de sélection (16) configurée pour comparer le contenu dans les informations système collectées avec les informations de référence dans chacun de la pluralité de modèles d'installation, et sélectionner une pluralité de modèles d'installation candidats dans lesquels les informations de référence satisfont aux exigences des informations système ; et une seconde unité de sélection (17), configurée pour sélectionner un modèle d'installation répondant aux exigences d'installation du NMS en comparant l'échelle de gestion, le nombre d'accès clients et les ressources occupées indiquées par chacun de la pluralité de modèles d'installation candidats sélectionnés par la première unité de sélection avec une échelle de gestion réelle, un nombre d'accès clients et les ressources occupées du NMS.

9. Dispositif de déploiement de NMS selon la revendication 7, dans lequel le NMS comprend en outre un premier serveur esclave (22) ; le module d'installation (14) est en outre configuré pour installer, avant que le module de démarrage démarre un programme principal d'installation de système dans le serveur de contrôle principal, le programme résident d'installation de système sur le premier serveur esclave, dans lequel le programme résident d'installation de système installé sur le premier serveur esclave est configuré avec un nom ou une adresse de protocole Internet, IP, du serveur de contrôle principal ; et
le module de collecte (11) est configuré pour collecter les informations système du NMS via la communication respective entre le programme principal d'installation de système et chaque programme résident d'installation de système.

10. Dispositif de déploiement de NMS selon l'une quelconque des revendications 7 à 9, dans lequel le premier script d'exécution comprend un script de déploiement de processus et un script de réglage de paramètre.

11. Dispositif de déploiement de NMS selon la revendication 7 ou 8, dans lequel le module de collecte (11) est en outre configuré pour collecter des informations système d'un serveur cible, dans lequel le serveur cible comprend tous les serveurs dans un NMS à configuration matérielle modifiée, ou comprend un ou plusieurs du serveur de contrôle principal et d'un second serveur esclave, le second serveur esclave est un serveur esclave ajouté lors de l'augmentation de capacité, et les informations système comprennent des informations matérielles et des informations logicielles du serveur cible ;
le module de sélection (12) est en outre configuré pour sélectionner un modèle d'augmentation de capacité satisfaisant les informations système conformément à une comparaison entre les informations système collectées par le module de collecte et les informations de référence d'une pluralité de modèles d'augmentation de capacité préconfigurés sur le serveur de contrôle principal, dans lequel les informations de référence sont configurées pour indiquer les informations matérielles et les informations logicielles du serveur cible qui conviennent à un modèle d'augmentation de capacité auquel les informations de référence se rapportent ; et
le module d'exécution (13) est en outre configuré pour exécuter une opération d'augmentation de capacité sur le NMS via le premier script d'exécution et un second script d'exécution dans le modèle d'augmentation de capacité sélectionné par le module de sélection,
dans lequel le module d'installation (14) est en outre configuré pour installer, avant que le module de collecte collecte des informations système du serveur cible, un programme résident d'augmentation de capacité de système sur le serveur cible, dans lequel le programme résident d'augmentation de capacité de système est configuré pour envoyer un message de demande d'augmentation de capacité au serveur de contrôle principal ; et
le module de démarrage (15) est en outre configuré pour démarrer un programme principal d'augmentation de capacité de système dans le serveur de contrôle principal, pour faire en sorte que le serveur de contrôle principal reçoive le message de demande d'installation via le programme principal d'augmentation de capacité de système démarré, et établisse un lien de communication entre le programme principal d'augmentation de capacité de système et le programme résident d'augmentation de capacité de système ;
dans lequel le NMS comprend en outre un premier serveur esclave (22), et le serveur cible comprend tous les serveurs dans le NMS à configuration matérielle modifiée, ou comprend un ou plusieurs du serveur de contrôle principal, du premier serveur esclave et du second serveur esclave ; et/ou
la pluralité de modèles d'augmentation de capacité est divisée à l'avance en fonction d'échelles de gestion de différents NMS, chacun de la pluralité de modèles d'augmentation de capacité est configuré pour indiquer, via les informations de référence, d'utiliser une échelle de gestion, un nombre d'accès clients et les ressources occupées d'un NMS déployé via le modèle d'augmentation de capacité, et le second script d'exécution comprend un script de sauvegarde de données et un script de migration de données.

12. Support de stockage lisible par ordinateur, stockant des instructions exécutables par ordinateur, qui sont utilisées pour exécuter le procédé de déploiement de NMS selon l'une quelconque des revendications 1 et 6.
